# NEUE EUROPÄISCHE PATENTSCHRIFT

(11) **EP 0 232 454 B2**
(45) Veröffentlichungstag und Bekanntmachung des Hinweises auf die Entscheidung über den Einspruch: **02.03.1994**
(45) Hinweis auf die Patenterteilung: 15.03.1989
(21) Anmeldenummer: 86110721.7
(22) Anmeldetag: 02.08.1986
(51) Int. Cl.: F16K 11/00, G05D 11/16

(54) **Stellvorrichtung für ein thermostatisch geregeltes Mischventil**
Actuating device for a thermostatically regulated mixing valve
Dispositif de commande pour une soupape de mélange réglée par thermostat

(30) Priorität: 29.08.1985 DE 3530812
(43) Veröffentlichungstag der Anmeldung: 19.08.1987
(73) Patentinhaber: FRIEDRICH GROHE AKTIENGESELLSCHAFT, D-58675 Hemer (DE)
(72) Erfinder: Kostorz, Jan Ryszard, D-5750 Menden 2 (DE)

(56) Entgegenhaltungen:
- EP-A- 0 202 959
- DE-A- 2 408 208
- DE-A- 2 751 169
- DE-A- 2 821 092
- DE-A- 2 922 094
- DE-A- 3 510 009
- DE-C- 1 164 779
- DE-C- 2 703 950
- DE-U- 7 405 957
- FR-A- 2 579 159

## Beschreibung

Die Erfindung betrifft eine Sollwerteinstellvorrichtung an einem thermostatisch geregelten Mischventil für Kalt- und Warmwasser mit den im Oberbegriff des Anspruchs 1 angegebenen Merkmalen.

Eine Einstellvorrichtung dieser Gattung ist aus der DE-PS 11 64 779 bekannt. Um eine bessere Regelgüte bei thermostatisch geregelten Mischventilen zu erhalten, ist es vielfach erforderlich, die Stellstrecke des Doppelsitzventilkörpers zu vergrößern, wodurch häufig das Bewegungsgewinde der Einstellvorrichtung, mit der die Axialverschiebung erfolgt, an die Grenze der Selbsthemmung gelangt, so daß eine sichere Einstellung der Mischwassertemperatur problematisch werden kann.

Der Erfindung liegt die Aufgabe zugrunde, die bekannte Einstellvorrichtung zu verbessern, so daß auch bei relativ großen Stellstrecken eine sichere Funktion über einen langen Gebrauchszeitraum gewährleistet und eine kostengünstige Herstellung ermöglicht ist.

Diese Aufgabe wird erfindungsgemäß durch die im kennzeichnenden Teil des Anspruchs 1 angegebenen Merkmale gelöst. Weitere Ausgestaltungen der Erfindung sind in den Ansprüchen 2 bis 5 angegeben.

Die mit der Erfindung erzielbaren Vorteile bestehen insbesondere darin, daß zur Erzeugung der Stellgröße relativ steilgängige Bewegungsgewinde eingesetzt werden konnen. Die Drehmomentübertragung in der Einstellvorrichtung erfolgt formschlüssig, wobei die Einzelteile im wesentlichen kostengünstig im Spritzgußverfahren herstellbar sind. Die Einzelteile der Einstellvorrichtung können im wesentlichen durch Schnappverbindungen einfach zusammengefügt werden, so daß eine sehr einfache Montage, Demontage und Justage ermöglicht wird. Schließlich können alle wesentlichen Teile der Einstellvorrichtung außerhalb des vom Wasser beaufschlagten Ventilgehäuses angeordnet werden.

Ein Ausführungsbeispiel der Erfindung ist in der Zeichnung dargestellt und wird im folgenden näher erläutert.

Es zeigt
Figur 1 ein Mischventil im Längsschnitt ;
Figur 2 die Einstellvorrichtung des Mischventils gemäß Figur 1 in vergrößerter Darstellung im Längsschnitt;
Figur 3 die Einstellvorrichtung gemäß Figur 2 in der Schnittebene III ;
Figur 4 die Einstellvorrichtung gemäß Figur 2 in der Schnittebene IV.

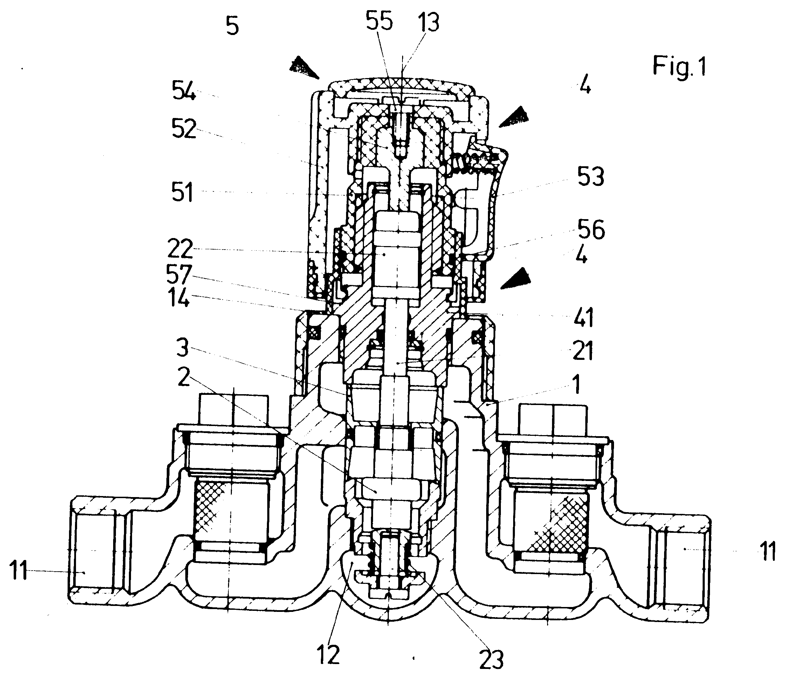

Das in Figur 1 gezeigte Mischventil besteht im wesentlichen aus einem Ventilgehäuse 1, einem Dehnstoffelement 2, einem Doppelsitzventilkörper 3 und einer Sollwertverstelleinrichtung 4 mit einem Kopfstück 41 und einem Drehgriff 5. Die Kaltwasser- und die Warmwasserversorgungsleitung werden jeweils an den Anschlußstücken 11 des Ventilgehäuses 1 angeschlossen, so daß in getrennten Kanälen das kalte und warme Wasser zum Doppelsitzventilkörper 3 führt und hier in Abhängigkeit von der axialen Position des Doppelsitzventilkörpers 3 durch jeweils einen Regelspalt in den Bereich des Dehnstoffelements 2 geführt, wo sich Kalt- und Warmwasser zu temperiertem Mischwasser mischen. Das temperierte Mischwasser gelangt danach durch einen Mischwasserauslaßkanal 12 zu einem oder mehreren Verbrauchern.

Das Dehnstoffelement 2 ist mit dem Doppelsitzventilkörper 3 festverbunden und federgestrammt mit einer Stellspindel 21 und einer Überlastsicherungseinheit 22 gegen ein im Drehgriff 5 angeordnetes Druckstück 54 gestrammt. Mit einem Bewegungsgewinde 42 kann die axiale Position des Druckstücks 54 und damit des Doppelsitzventilkörpers 3 durch eine Drehbewegung um die Mittelachse 13 verändert werden, so daß in Abhängigkeit von der Drehstellung des Drehgriffs 5 der Sollwert der Mischwassertemperatur bestimmt werden kann. Bei einer Differenz zwischen dem Temperatursollwert und dem lstwert erfolgt eine entsprechende Verschiebung des Doppelsitzventilkörpers 3 durch ein Dehnen oder Schrumpfen des Dehnstoffelements 2, so daß eine Anpassung von Soll- und lstwert der Mischwassertemperatur erreicht wird.

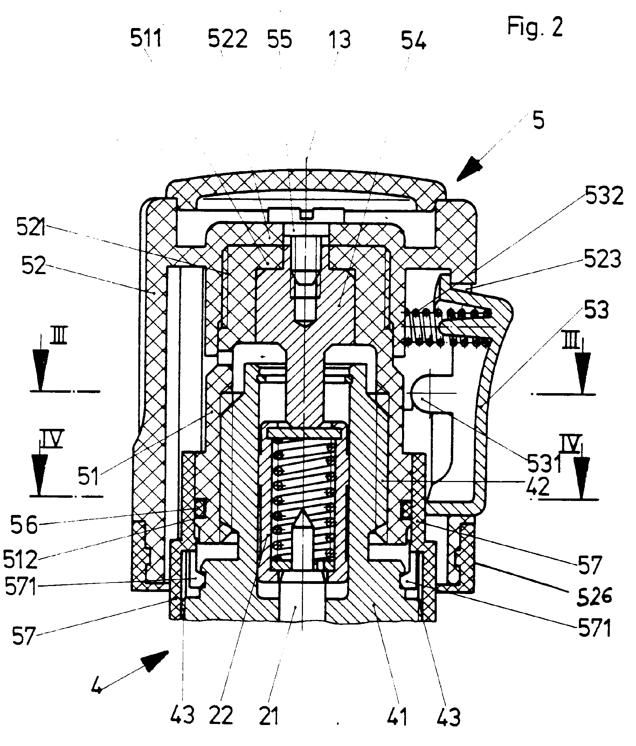

Die Sollwerteinstellvorrichtung 4 ist mit einem Kopfstück 41 in eine Aufnahmebohrung des Ventilgehäuses 1 gedichtet eingeschraubt. Konzentrisch in dem Kopfstück 41 ist die Stellspindel 21 gedichtet gelagert sowie die Überlastsicherungs- einheit 22 geführt. Auf dem vorstehenden Hohlzapfen des Kopfstücks 41 ist ein Bewegungsgewinde 42 angeordnet, wie insbesondere der Figur 2 zu entnehmen ist. Außerdem ist im Bereich des Ventilgehäuses 1 auf der äußeren Mantelfläche des Kopfstücks 41 eine Riefenverzahnung 43 ausgebildet fur die drehfeste Aufnahme eines Anschlagrings 57.

Auf dem Bewegungsgewinde 42 ist der Drehgriff 5, bestehend aus einer Stellmutter 51 und einer Griffhaube 52 angeordnet. Die Stellmutter 51 ist topfartig ausgebildet und trägt im Grund das Druckstück 54, das sich am Boden 511 abstützt. Im Bereich des Bodens 511, an der äußeren Mantelfläche, ist eine Riefenverzahnung 521 ausgebildet, auf die die Griffhaube 52 mit einer entsprechenden Riefenverzahnung axial aufgeschoben wird und dadurch drehfest mit der Stellmutter 51 verbindbar ist. Zur Axialsicherung der Griffhaube 52 auf der Stellmutter 51 ist an der Mittelachse 13 eine Befestigungsschraube 55 angeordnet, die einerseits am Boden 522 der Griffhaube 52 anliegt und andererseits in das Druckstück 54 einschraubbar ist. Die beiden aufeinandergesteckten Teile, Stellmutter 51 und Griffhaube 52, bilden an der dem Ventilgehäuse 1 zugekehrten Stirnseite einen umlaufenden Ringspalt, in den ein mittels Riefenverzahnung 43 drehfest auf dem Kopfstück 41 gehalterter Anschlagring 57 einfaßt. Die Stellmutter 51 weist in diesem Bereich eine zylindrische Mantelfläche mit einer umlaufenden Nut 512 zur Aufnahme eines Bremsrings 56 auf. Der Anschlagring 57 weist in diesem Bereich eine ebenfalls zylindrische innere Mantelfläche auf und preßt den aus einem Elastomer gebildeten Bremsring in die Nut 512. Durch eine entsprechende Auslegung des Bremsrings 56 kann somit ein bestimmter Drehwiderstand erzeugt werden, wodurch gewährleistet wird, daß die Stellvorrichtung in einer gewählten Drehposition verharrt und ein selbsttätiges Verdrehen ausgeschlossen ist. Zur besseren Haftung des Bremsrings 56 im Grund der Nut 512 können hier kleine Querrippen 513 ausgebildet sein.

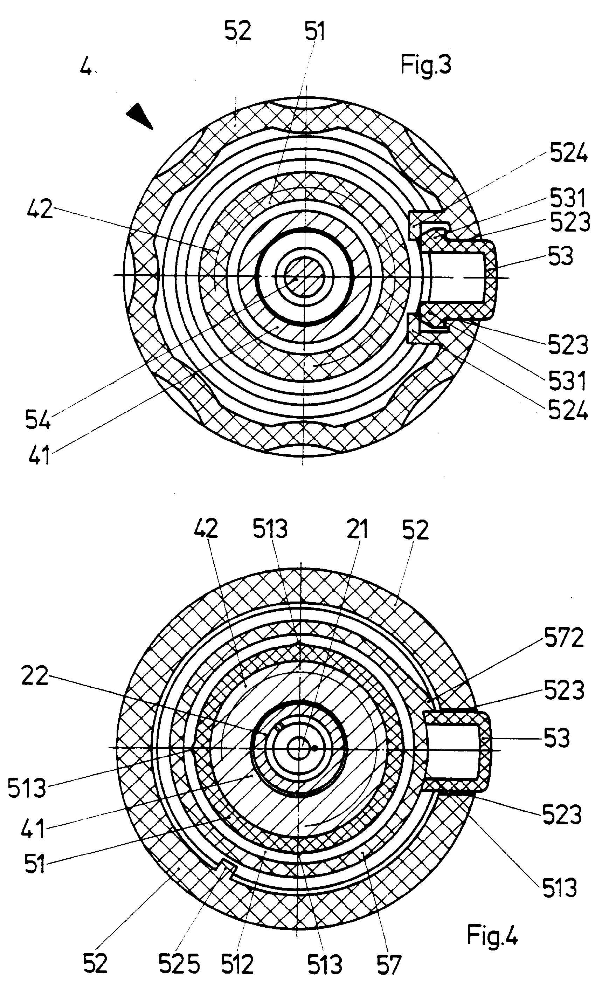

Zur Drehbegrenzung weist der Anschlagring an der äußeren Mantelfläche außerdem eine Anschlagnase 572 auf. wie insbesondere aus der Zeichnung Figur 4 zu entnehmen ist. An dieser Anschlagnase 572 gelangen je nach Drehstellung eine federgestrammte Wippe 53 oder ein Festanschlag 525 der Griffhaube 52 zur Anlage. Die Wippe 53 ist dabei in einem Radialschlitz 523 der Griffhaube 52 angeordnet. Die Wippe 53 ist im Querschnitt U-förmig gestaltet und mit als Schnappnasen 531 ausgebildeten Wipplagern in entsprechend geformten Aufnahmen 524 an den Seiten des Radialschlitzes 523 verschwenkbar gehaltert.

Die zur wahlweisen Einstellung der Mischwassertemperatur erforderlichen Stellwege werden durch Drehen der Griffhaube 52 erzeugt, welche durch die Riefenverzahnung 521 mit der Stellmutter 51 formschlüssig verbunden ist und die Drehbewegung in eine Hubbewegung mit Hilfe des Bewegungsgewindes 42 umsetzt. Das in der Stellmutter 51 angeordnete Druckstück 54 wirkt auf die Überlastsicherungseinheit 22 ein. Auf der Gegenseite der Überlastsicherungseinheit 22 wird die Stellspindel 21 zusammen mit dem Doppelsitzventilkörper 3 und dem Dehnstoffelement 2 von der Rückstellfeder 23 gegengestrammt.

In der Kaltwasserstellung des Mischventils ist der Drehgriff 5 mit seiner Stirnfläche an der Stirnseite 14 des Ventilgehäuses 1 aufgesetzt. Als Verbrühungsschutz gelangt bei einem Verstellen des Drehgriffs 5 von der Kaltwasserstellung in eine Warmwasserstellung zunächst der als Wippe 53 ausgebildete Anschlag an der Anschlagnase 572 des Anschlagrings 57 zur Anlage, wie insbesondere Figur 4 zu entnehmen ist. Wird nun die Wippe 53 im Bereich der Druckfeder 532 radial in die Griffhaube 52 eingedrückt, so wird die Wippe 53 im Bereich der Anschlagnase 572 angehoben und der Drehgriff 5 kann weiter verstellt werden bis zur Anlage des Festanschlags 525 an der Anschlagnase 572. In dieser Stellung befindet sich das Mischventil in der Heißwasserstellung. Durch den Bremsring 56 wird sichergestellt, daß der Drehgriff 5 in jeder gewählten Drehstellung sicher verharrt. Damit der Anschlagring 57 von der axial bewegten Stellmutter 51 nicht aus der Riefenverzahnung 43 gezogen wird, ist er mit Schnappzungen 571 am Kopfstück 41 verrastet. Zur Einstellung der Sollwerttemperatur weist die Griffhaube 52 eine Skala 526 auf.

Die Stellmutter 51, die Griffhaube 52, die Wippe 53 und der Anschlagring 57 sind aus thermoplastischen Kunststoffen im Spritzgußverfahren hergestellt und können bei der Montage in einfacher Weise untereinander verschnappt werden.

## Patentansprüche

1. Sollwerteinstellvorrichtung an einem thermostatisch geregelten Mischventil für Kalt- und Warmwasser, bei der mit einem Drehgriff (5), der aus einer Stellmutter (51) und einer formschlüssig auf der Stellmutter (51) gehalterten Griffhaube (52) besteht, und einem Bewegungsgewinde (42) die Stellgröße erzeugt wird und der Drehgriff (5) mit einem feststehenden Anschlagring (57) zusammenwirkt, wobei ein von Hand lösbarer Anschlag als Drehbegrenzung am Drehgriff (5) ausgebildet ist, dadurch gekennzeichnet, daß die Stellmutter (51) topfartig mit einem Boden (511) ausgebildet und auf einem feststehenden Kopfstück (41) schraubbar ist, wobei an der dem Ventilgehäuse (1) zugekehrten Stirnseite des Drehgriffs (5) ein Ringspalt ausgebildet ist, in den der Anschlagring (57) hineinragt und zwischen der Außenwandung der Stellmutter (51) und der Innenwandung des Anschlagrings (57) ein Reibmittel vorgesehen ist, so daß der Drehgriff (5) eine bestimmte Schwergängigkeit erhält, und daß der lösbare Anschlag als federgestrammte Wippe (53) ausgebildet ist, die am Außenbereich des Anschlagrings (57) die Drehung begrenzt.

2. Sollwerteinstellvorrichtung nach Anspruch 1, dadurch gekennzeichnet, daß die Stellmutter (51) am Boden (511) ein Druckstück (54) trägt und die Griffhaube (52) ebenfalls topfartig ausgebildet und mittels Riefenverzahnung (521) im Bereich des Bodens (511) drehfest auf der Stellmutter (51) gehaltert ist, wobei auf der Mittelachse (13) eine Befestigungsschraube (55) vorgesehen ist, die an der einen Seite das Druckstück (54) und an der anderen Seite den topfartigen Boden (522) der Griffhaube (52) an den Stirnseiten des Bodens (511) der Stellmutter (51) haltert.

3. Sollwerteinstellvorrichtung nach Anspruch 1 und/oder 2, dadurch gekennzeichnet, daß die Wippe (53) im Querschnitt U-förmig gestaltet ist und mit als Schnappnasen (531) ausgebildeten Wipplagern in entsprechend geformten Aufnahmen (524) an den Seiten des Radialschlitzes (523) in der Griffhaube (52) verschwenkbar gehaltert ist.

4. Sollwerteinstellvorrichtung nach wenigstens einem der Ansprüche 1 bis 3, dadurch gekennzeichnet, daß als Reibmittel ein in einer Nut (512) gehalterter Bremsring (56) aus einem Elastomer oder sonstigem geeigneten Werkstoff vorgesehen ist und der Anschlagring (57) mittels Schnappzungen (571) axial festliegend gehaltert ist, wobei die einander zugeordneten Wandungen als zylindrische Mantelflächen am Anschlagring (57) und an der Stellmutter (51) ausgebildet sind.

5. Sollwerteinstellvorrichtung nach wenigstens einem der Ansprüche 1 bis 4, dadurch gekennzeichnet, daß die Stellmutter (51), die Griffhaube (52), der Anschlagring (57) und die Wippe (53) im Spritzgußverfahren aus Kunststoff hergestellt sind.

## Claims

1. Desired value adjusting device on a thermostatically controlled mixer valve for cold and hot water, in which the manipulated variable is generated with a twist grip (5), which consists of an adjusting nut (51) and a grip dome (52) mounted with a positive fit on the adjusting nut (51), and with a movement thread (42), and in which the twist grip (5) co-operates with a fixed stop ring (57), wherein a manually releasable stop is constructed on the twist grip (5) as the twist limiting means, characterized in that the adjusting nut (51) is of cup-shaped construction with a floor (511) and can be screwed onto a fixed top piece (41), wherein on the end face of the twist grip (5) facing towards the valve housing (1) there is formed an annular slot into which the stop ring (57) projects and between the outer wall of the adjusting nut (51) and the inner wall of the stop ring (57) there is provided a friction medium, so that the twist grip (5) retains a certain stiffness, and the releasable stop is constructed as a spring-loaded rocker (53) which restricts rotation at the outer region of the stop ring (57).

2. Desired value adjusting device according to claim 1, characterized in that the adjusting nut (51) carries on its floor (511) a pressure piece (54) and the grip dome (52) is likewise of cup-shaped construction and is mounted, so that they rotate together, on the adjusting nut (51) by means of corrugated toothing (521) in the region of the floor (511), wherein on the centre axis (13) there is provided a fastening screw (55) which on the one side fixes the pressure piece (54) and on the other side fixes the cup-shaped floor (522) of the grip dome (52) against the end faces of the floor (511) of the adjusting nut (51).

3. Desired value adjusting device according to claim 1 and/or 2, characterized in that the rocker (53) is U-shaped in cross-section and is pivotally mounted with rocker bearings constructed as snap fit projections (531) in correspondingly shaped seats (524) at the sides of the radial slot (523) in the grip dome (52).

4. Desired value adjusting device according to at least one of claims 1 to 3, characterized in that, as friction medium, there is provided a braking ring (56) of an elastomer or other suitable material held in a groove (512), and the stop ring (57) is mounted such that it is axially fixed by means of snap-fit tongues (571), wherein the walls assigned to one another are constructed as cylindrical surfaces on the stop ring (57) and on the adjusting nut (51).

5. Desired value adjusting means according to at least one of claims 1 to 4, characterized in that the adjusting nut (51), the grip dome (52), the stop ring (57) and the rocker (53) are manufactured from plastics material by the injection moulding process.

## Revendications

1. Dispositif de réglage de consigne pour robinet mélangeur à régulation thermostatique pour de l'eau froide et de l'eau chaude dans lequel on forme la grandeur de consigne (grandeur de réglage) à l'aide d'une poignée tournante (5) formée d'un écrou de réglage (51) et d'une coiffe de poignée (52) reliés par une liaison par la forme à l'écrou de réglage (51) et d'un filetage d'entraînement (42), et la poignée tournante (5) coopère avec une bague de butée (57), fixe, une butée susceptible d'être débloquée à la main servant de moyen de limitation de rotation sur la poignée tournante (5), dispositif caractérisé en ce que l'écrou de réglage (51) est en forme de pot et est vissé sur une partie supérieure (41) fixe, la face frontale de la poignée tournante (5), face située du côté du boîtier (1) du robinet, comporte un intervalle annulaire dans lequel pénètre la bague de butée (57) et en ce qu'il est prévu un moyen de friction entre la paroi extérieure de l'écrou de réglage (51) et la paroi intérieure de la bague de butée (57) pour que la poignée tournante (5) oppose une certaine résistance et la butée amovible est en forme d'élément basculant (53) tendu par un ressort qui limite la rotation sur la paroi extérieure de la bague de butée (57).

2. Dispositif de réglage de consigne selon la revendication 1, caractérisé en ce que l'écrou de réglage (51) porte une pièce de poussée (54) au niveau de son fond (511) et la coiffe (52) de la poignée est également en forme de pot et est maintenue par une denture à cannelure (521) au niveau du fond (511) de manière solidaire en rotation sur l'écrou de réglage (51), une vis de fixation (55) étant prévue dans l'axe (13), vis qui est maintenue d'un côté contre la pièce de poussée (54) et de l'autre côté contre le fond en forme de pot (522) de la coiffe de poignée (52) au niveau des deux faces frontales du fond (511) de l'écrou de réglage (51).

3. Dispositif de réglage de consigne selon la revendication 1 et/ou la revendication 2, caractérisé en ce que l'élément basculant (53) a une section en forme de U et est maintenu par des paliers de basculement en forme de becs d'encliquetage (531) dans des cavités (524) de forme correspondante réalisées sur les côtés de la fente radiale (523) de la coiffe de poignée (52) suivant un mouvement de basculement.

4. Dispositif de réglage de consigne selon au moins l'une des revendications 1 à 3, caractérisé en ce que le moyen de friction est une bague de freinage (56) logée dans une raînure (512), bague en un élastomère ou autre matériau approprié et la bague de butée (57) est maintenue de manière axialement fixe par des languettes d'encliquetage (571), les parois associées étant réalisées en forme de surfaces enveloppes cylindriques sur la bague de butée (57) et sur l'écrou de réglage (51).

5. Dispositif de réglage de la valeur de consigne selon au moins l'une des revendications 1 à 4, caractérisé en ce que l'écrou de réglage (51), la coiffe de poignée (52) et la bague de butée (57) ainsi que l'élément basculant (53) sont réalisés par injection en matière synthétique.
